# EUROPÄISCHE PATENTANMELDUNG

(11) **EP 2 565 389 A1**
(43) Veröffentlichungstag der Anmeldung: **06.03.2013**
(21) Anmeldenummer: 11179159.6
(22) Anmeldetag: 29.08.2011
(51) Int. Cl.: F01D 19/02, F01D 25/10, F02C 7/26, F02C 9/28

(54) **Verfahren zum Anfahren einer Strömungsmaschine**

(71) Anmelder: SIEMENS AKTIENGESELLSCHAFT, 80333 München (DE)
(72) Erfinder: Ahaus, Guido, 45133 Essen (DE); Balkowski, Ingo, 47647 Kerken (DE); Flohr, Patrick Ronald, 45478 Mülheim a.d. Ruhr (DE); Heckel, Waldemar, 45357 Essen (DE); Hoell, Harald, 63607 Wächtersbach (DE); Lyko, Christian, 44627 Herne (DE); Ricken, Oliver, 45149 Essen (DE); Sieber, Uwe, 45476 Mülheim an der Ruhr (DE); Stock, Sebastian, 45479 Mülheim (DE); Veitsman, Vyacheslav, 45879 Gelsenkirchen (DE); Woditschka, Frank, 47229 Duisburg (DE)

(57) **Zusammenfassung**

Ein Verfahren zum Anfahren einer Strömungsmaschine (101) mit einem Rotor soll angegeben werden, welches ein schnelleres Anfahren erlaubt, ohne dabei die Lebensdauer des Rotors zu reduzieren. Dazu wird bei Überschreitung eines für die Temperatur in einem vorgegebenen Bereich des Rotors charakteristischen Grenzwertes die Strömungsmaschine (101) in Betrieb genommen, wobei die Temperatur in dem vorgegebenen Bereich des Rotors gemessen wird.

## Beschreibung

Die Erfindung betrifft ein Verfahren zum Anfahren einer Strömungsmaschine mit einem Rotor.

Eine Strömungsmaschine ist eine Fluidenergiemaschine, bei der die Energieübertragung zwischen Fluid und Maschine in einem offenen Raum durch eine Strömung nach den Gesetzen der Fluiddynamik über den Umweg der kinetischen Energie erfolgt. Die Energieübertragung erfolgt normalerweise mittels Rotorblättern, Flügeln oder Schaufeln, die derart profiliert sind, dass durch die Umströmung eine Druckdifferenz zwischen Vorder- und Rückseite entsteht (Tragflächenprofil). Eine Strömungsmaschine besteht typischerweise aus einem rotierenden Teil, dem Rotor, und einem statischen Teil, dem Stator.

Eine Gasturbine ist eine Strömungsmaschine, in der ein unter Druck stehendes Gas expandiert. Sie besteht aus einer Turbine oder Expander, einem vorgeschalteten Verdichter und einer dazwischengeschalteten Brennkammer. Das Wirkungsprinzip beruht auf dem Kreisprozess (Joule-Prozess): Dieser komprimiert über die Beschaufelung einer oder mehrerer Verdichterstufen Luft, mischt diese anschließend in der Brennkammer mit einem gasförmigen oder flüssigen Treibstoff, zündet und verbrennt. Außerdem wird die Luft zur Kühlung insbesondere thermisch stark beanspruchter Bauteile eingesetzt.

So entsteht ein Heißgas (Mischung aus Verbrennungsgas und Luft), das im nachfolgenden Turbinenteil entspannt, wobei sich thermische in mechanische Energie umwandelt und zunächst den Verdichter antreibt. Der verbleibende Anteil wird beim Wellentriebwerk zum Antrieb eines Generators, eines Propellers oder anderen rotierenden Verbrauchern verwendet. Beim Strahltriebwerk dagegen beschleunigt die thermische Energie den heißen Gasstrom, was den Schub erzeugt.

Der Rotor einer Strömungsmaschine ist insbesondere bei Gasturbinen ein thermisch und mechanisch hoch beanspruchtes Bauteil. Insbesondere beim Kaltstart der Strömungsmaschine werden die Rotorscheiben sehr stark beansprucht. Einerseits werden die Rotoren im Bereich der Schaufelfüße, mittels derer die Schaufeln an einer Rotorwelle befestigt sind, stark erwärmt, andererseits wird der Rotor von Kühlluft durchströmt, damit die Materialtemperatur nicht die Festigkeitsgrenzen überschreitet.

Die sich im Inneren des Rotors einstellenden Strömungsstrukturen und Wärmeübergangseffekte sind äußerst komplex und seit Jahrzehnten weltweit Gegenstand der universitären Forschung. Dies gilt erst recht für die transienten Vorgänge beim An- und Abfahren der Maschinen.

Die im Rotor auftretenden Temperaturen und insbesondere die Temperaturgradienten, die zu Thermospannungen führen, werden in der Praxis zurzeit konservativ, d. h. eher zur sicheren Seite hin abgeschätzt. Hierbei kommt häufig die FEM (Finite-Elemente-Methode) zu Anwendung, ein numerisches Verfahren zur Lösung von partiellen Differentialgleichungen, mit dem Festkörpersimulationen durchgeführt werden können. Die Randbedingungen werden hier anhand einzelner Prototypenmessungen bestimmt. Hier werden teilweise auch Stichprobenmessungen der Temperatur einzelner Rotorkomponenten durchgeführt.

Die so gewonnenen Daten werden genutzt, um einerseits die maximale Anzahl an Startzyklen abzuschätzen, die ein Rotor übersteht, bevor er ausgetauscht werden muss, und um andererseits eine in einigen Fällen notwendige Vorheizzeit des Rotors abzuschätzen, die erforderlich ist, um Thermospannungen auf ein erträgliches Maß zu reduzieren und die Anzahl an erlaubten Startzyklen hoch genug zu halten.

Allerdings bedeutet ein Abwarten einer bestimmten Zeit vor der Inbetriebnahme des Rotors stets einen erhöhten Energieverbrauch und eine längere Anlaufzeit der Strömungsmaschine, was gerade z. B. bei Gas- und Dampfturbinenkraftwerken unerwünscht ist, da insbesondere erstgenannte oft kurzfristige Leistungsspitzenanforderungen des Stromnetzes decken müssen.

Aufgabe der Erfindung ist es daher, ein Verfahren zum Anfahren einer Strömungsmaschine anzugeben, welches ein schnelleres Anfahren erlaubt, ohne dabei die Lebensdauer des Rotors zu reduzieren.

Diese Aufgabe wird erfindungsgemäß gelöst, indem bei Überschreitung eines für die Temperatur in einem vorgegebenen Bereich des Rotors charakteristischen Grenzwertes die Strömungsmaschine in Betrieb genommen wird und die Temperatur in dem vorgegebenen Bereich des Rotors gemessen wird.

Die Erfindung geht dabei von der Überlegung aus, dass ein schnelleres Anfahren insbesondere dadurch möglich wäre, dass während des Anfahrens der Strömungsmaschine besonders genaue und aktuelle Daten zum Temperaturverhalten des Rotors zur Verfügung gestellt werden. Die benötigte Zeit zum Anfahren kann dann nämlich optimal angepasst werden. Hierzu können beispielsweise basierend auf der Anpassung an transiente Temperaturverläufe aus FEM-Modellen analytische Temperaturformeln abgeleitet werden, mit Hilfe derer die Materialtemperatur anhand erfasster Betriebsdaten abgeschätzt werden kann. Erst bei Überschreitung eines für die Temperatur in einem vorgegebenen Bereich des Rotors charakteristischen Grenzwertes wird dann die Strömungsmaschine in Betrieb genommen. Eine derartige Abschätzung muss jedoch hinsichtlich der Betriebssicherheit und Lebensdauer stets konservativ ausfallen. Dies kann jedoch dazu führen, dass das Abwarten der entsprechenden Temperaturverhältnisse unnötig lange dauert oder sogar der Startvorgang der Strömungsmaschine verriegelt wird, obwohl die erforderliche Materialtemperatur erreicht ist, aber durch die Temperaturformel als zu niedrig abgeschätzt wird. Daher sollte die Genauigkeit der Temperaturbestimmung verbessert werden. Dies ist erreichbar, indem die Temperatur in dem vorgegebenen Bereich des Rotors gemessen wird.

In vorteilhafter Ausgestaltung des Verfahrens wird die Temperatur dabei kontinuierlich gemessen. Dadurch ist jederzeit eine exakte Bestimmung der Temperatur möglich und die Vorheizzeit wird auf ein Minimum reduziert, da das Erreichen des Grenzwerts sofort erkannt werden kann. Eine kontinuierliche Messung der Temperatur ermöglicht zudem eine Ansammlung von Temperatur- und -gradientendaten über die gesamte Lebensdauer der Strömungsmaschine, was eine bessere Abschätzung der verbleibenden Lebensdauer ermöglicht.

In weiterer vorteilhafter Ausgestaltung ist der Grenzwert die Sprödbruch-Grenztemperatur eines in dem vorgegebenen Bereich verwendeten Materials. Da die verwendeten Materialien nämlich unterhalb dieser Temperatur sprödbrechend werden, sollte die Strömungsmaschine erst nach Aufheizen des Rotors über diese Grenztemperatur in Betrieb genommen werden. Somit wird der Zeitpunkt der Inbetriebnahme nach dem Aufheizen noch weiter optimiert und die Lebensdauer weiter erhöht.

Vorteilhafterweise ist der vorgegebene Bereich der im Betrieb der Strömungsmaschine im Vergleich mit anderen Bereichen mechanisch am höchsten belastete Bereich. Nicht alle Bereiche des Rotors der Strömungsmaschine sind nämlich im Betrieb mechanisch gleich hoch belastet. So sind z. B. die Scheiben-Naben des Rotors vergleichsweise hoch belastete Teile. Um keine Temperaturmessung in sämtlichen Bereichen durchführen zu müssen, sollte zumindest sichergestellt werden, dass in jedem Fall die hoch belasteten Bereiche zur Inbetriebnahme ausreichend vorgeheizt sind.

In alternativer oder zusätzlicher vorteilhafter Ausgestaltung ist der vorgegebene Bereich der sich beim Vorheizen der Strömungsmaschine im Vergleich mit anderen Bereichen am langsamsten aufheizende Bereich. Nicht alle Bereiche des Rotors werden nämlich beim Vorheizen gleich schnell erhitzt. Durch diese Maßnahme wird so sichergestellt, das sämtliche Bereiche, auch die, die eine schnellere Aufheizung erfahren, vor der Inbetriebnahme eine ausreichende Temperatur aufweisen, ohne an mehreren Stellen des Rotors Temperaturmessungen durchführen zu müssen.

In weiterer vorteilhafter Ausgestaltung wird der Rotor vorgeheizt. Eine Rotor-Vorheizeinrichtung sorgt hier für ein zusätzliches Vorheizen des Rotors. Gerade bei Anfahrvorgängen, bei denen ein solches Vorheizen notwendig ist, sorgt die beschriebene Temperaturmessung für eine Minimierung der Zeit des Vorheizvorganges und für ein schnelleres Anfahren.

Vorteilhafterweise ist die Strömungsmaschine eine Gasturbine. Gerade in Gasturbinen, die die höchsten thermischen und mechanischen Belastungen an ihren Bauteilen, insbesondere dem Rotor aufweisen, ist das beschriebene Verfahren von erheblichem Vorteil und verkürzt die Anfahrzeit ohne Einbußen hinsichtlich der Betriebssicherheit oder Lebensdauer.

Eine Strömungsmaschine mit einem Rotor weist vorteilhafterweise eine Temperaturmesseinrichtung in einem Bereich des Rotors und eine Steuereinheit mit Mitteln zum Ausführen des beschriebenen Verfahrens auf.

Eine derartige Strömungsmaschine kommt vorteilhafterweise in einem Kraftwerk zum Einsatz.

Die mit der Erfindung erzielten Vorteile bestehen insbesondere darin, dass durch eine kontinuierliche Temperaturmessung das Erreichen einer ausreichenden Temperatur zur Inbetriebnahme sofort erkannt wird und eine Verkürzung des Anfahrprozesses ohne Reduzierung der Lebensdauer ermöglicht wird. Neben der Zeitersparnis und damit höheren Flexibilität wird dabei weniger Energie beim Anfahren verbraucht. Die im Vergleich zur analytischen Temperaturabschätzung genauere Bestimmung der Rotortemperatur mittels geeigneter Messverfahren lässt eine bessere Verfügbarkeit von Gasturbinen für den Startvorgang zu, da die konservativen Sicherheitsaufschläge entfallen. Gleichzeitig stehen durch die Messung über die gesamte Lebensdauer der Maschine aktuelle Daten zum Temperaturverhalten des Rotors zur Verfügung. Mit Hilfe dieser Daten können wesentlich genauere Lebensdauerabschätzungen für Rotoren gemacht werden und die Anzahl der zu erlaubenden Starts entsprechend physikalischer Gegebenheiten aktuell angepasst werden. Dies ist insbesondere bei Anlagen mit häufigen Kaltstarts ein unmittelbarer wirtschaftlicher Vorteil für den Betreiber. Außerdem lässt sich die erforderliche Aufheizzeit bei Gasturbinen mit eingesetzter Rotorheizung reduzieren.

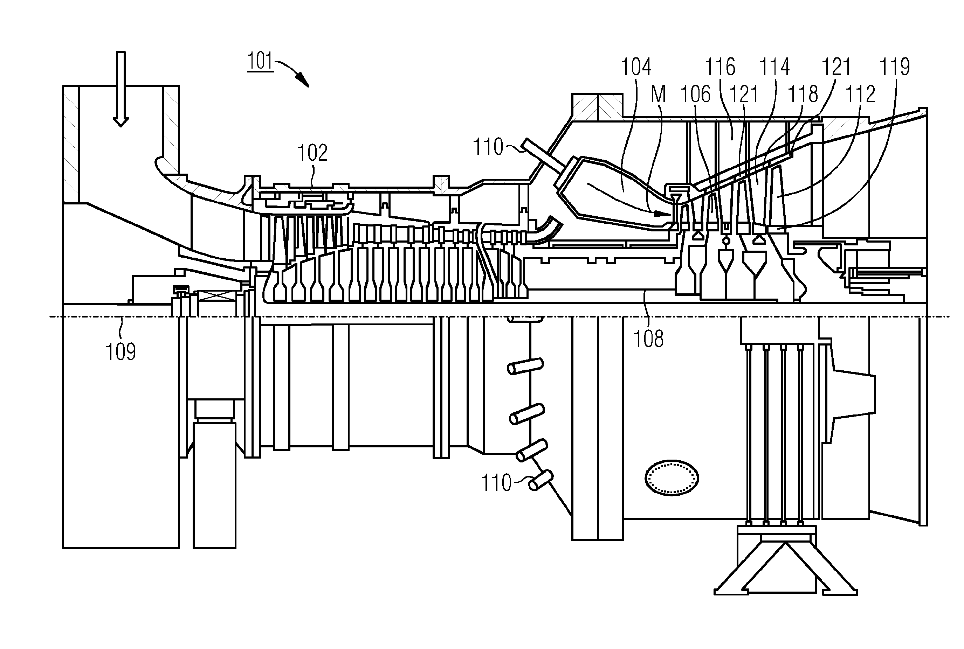

Die Erfindung wird anhand einer Zeichnung näher erläutert. Darin zeigt die Figur einen Schnitt durch eine Gasturbine.

Eine Gasturbine 101, wie in der FIG dargestellt, ist eine Strömungsmaschine. Sie weist einen Verdichter 102 für Verbrennungsluft, eine Brennkammer 104 sowie eine Turbineneinheit 106 zum Antrieb des Verdichters 102 und eines nicht dargestellten Generators oder einer Arbeitsmaschine auf. Dazu sind die Turbineneinheit 106 und der Verdichter 102 auf einer gemeinsamen, auch als Turbinenläufer bezeichneten Turbinenwelle 108 angeordnet, mit der auch der Generator bzw. die Arbeitsmaschine verbunden ist, und die um ihre Mittelachse 109 drehbar gelagert ist. Diese Einheiten bilden den Rotor der Gasturbine 101. Die in der Art einer Ringbrennkammer ausgeführte Brennkammer 104 ist mit einer Anzahl von Brennern 110 zur Verbrennung eines flüssigen oder gasförmigen Brennstoffs bestückt.

Die Turbineneinheit 106 weist eine Anzahl von mit der Turbinenwelle 108 verbundenen, rotierbaren Laufschaufeln 112 auf. Die Laufschaufeln 112 sind kranzförmig an der Turbinenwelle 108 angeordnet und bilden somit eine Anzahl von Laufschaufelkränzen oder -reihen. Weiterhin umfasst die Turbineneinheit 106 eine Anzahl von feststehenden Leitschaufeln 114, die ebenfalls kranzförmig unter der Bildung von Leitschaufelreihen an einem Leitschaufelträger 116 der Turbineneinheit 106 befestigt sind. Die Laufschaufeln 112 dienen dabei zum Antrieb der Turbinenwelle 108 durch Impulsübertrag vom die Turbineneinheit 106 durchströmenden Arbeitsmedium M. Die Leitschaufeln 114 dienen hingegen zur Strömungsführung des Arbeitsmediums M zwischen jeweils zwei in Strömungsrichtung des Arbeitsmediums M gesehen aufeinander folgenden Laufschaufelreihen oder Laufschaufelkränzen. Ein aufeinander folgendes Paar aus einem Kranz von Leitschaufeln 114 oder einer Leitschaufelreihe und aus einem Kranz von Laufschaufeln 112 oder einer Laufschaufelreihe wird dabei auch als Turbinenstufe bezeichnet.

Jede Leitschaufel 114 weist eine Plattform 118 auf, die zur Fixierung der jeweiligen Leitschaufel 114 an einem Leitschaufelträger 116 der Turbineneinheit 106 als Wandelement angeordnet ist. Die Plattform 118 ist dabei ein thermisch vergleichsweise stark belastetes Bauteil, das die äußere Begrenzung eines Heißgaskanals für das die Turbineneinheit 106 durchströmende Arbeitsmedium M bildet. Jede Laufschaufel 112 ist in analoger Weise über eine auch als Schaufelfuß bezeichnete Plattform 119 an der Turbinenwelle 108 befestigt.

Zwischen den beabstandet voneinander angeordneten Plattformen 118 der Leitschaufeln 114 zweier benachbarter Leitschaufelreihen ist jeweils ein Ringsegment 121 an einem Leitschaufelträger 1 der Turbineneinheit 106 angeordnet. Die äußere Oberfläche jedes Ringsegments 121 ist dabei ebenfalls dem heißen, die Turbineneinheit 106 durchströmenden Arbeitsmedium M ausgesetzt und in radialer Richtung vom äußeren Ende der ihm gegenüber liegenden Laufschaufeln 112 durch einen Spalt beabstandet. Die zwischen benachbarten Leitschaufelreihen angeordneten Ringsegmente 121 dienen dabei insbesondere als Abdeckelemente, die das Innengehäuse im Leitschaufelträger 116 oder andere Gehäuse-Einbauteile vor einer thermischen Überbeanspruchung durch das die Turbine 106 durchströmende heiße Arbeitsmedium M schützen.

Die Brennkammer 104 ist im Ausführungsbeispiel als so genannte Ringbrennkammer ausgestaltet, bei der eine Vielzahl von in Umfangsrichtung um die Turbinenwelle 108 herum angeordneten Brennern 110 in einen gemeinsamen Brennkammerraum münden. Dazu ist die Brennkammer 104 in ihrer Gesamtheit als ringförmige Struktur ausgestaltet, die um die Turbinenwelle 108 herum positioniert ist.

Zum Anfahren muss vor der Inbetriebnahme des Rotors sichergestellt sein, dass die mechanischen und thermischen Belastungen am Rotor keine Beschädigungen verursachen. Dazu wird die Gasturbine 101 erst in Betrieb genommen, wenn der Rotor in besonders stark beanspruchten und sich relativ langsam erwärmenden Bereichen wie z. B. den Plattformen 119 der Laufschaufeln 112 eine ausreichende Temperatur erreicht hat. Dies wird anhand einer kontinuierlichen Messung in diesen Bereichen überprüft. Dabei wird insbesondere überprüft, ob die Temperaturen oberhalb der Sprödbruch-Grenztemperatur liegen.

Durch dieses Anfahrverfahren wird einerseits die Anfahrzeit der Gasturbine 101 reduziert. Andererseits stehen Temperaturdaten des Rotors zur Verfügung, was besonders genaue Vorhersagen hinsichtlich der Lebensdauer der Gasturbine 101 ermöglicht.

## Patentansprüche

1. Verfahren zum Anfahren einer Strömungsmaschine (101) mit einem Rotor,
bei dem bei Überschreitung eines für die Temperatur in einem vorgegebenen Bereich des Rotors charakteristischen Grenzwertes die Strömungsmaschine (101) in Betrieb genommen wird,
wobei die Temperatur in dem vorgegebenen Bereich des Rotors gemessen wird.

2. Verfahren nach Anspruch 1,
bei dem die Temperatur kontinuierlich gemessen wird.

3. Verfahren nach Anspruch 1 oder 2,
bei dem der Grenzwert die Sprödbruch-Grenztemperatur eines in dem vorgegebenen Bereich verwendeten Materials ist.

4. Verfahren nach einem der vorhergehenden Ansprüche,
bei dem der vorgegebene Bereich der im Betrieb der Strömungsmaschine (101) im Vergleich mit anderen Bereichen mechanisch am höchsten belastete Bereich ist.

5. Verfahren nach einem der vorhergehenden Ansprüche,
bei dem der vorgegebene Bereich der sich im Vergleich mit anderen Bereichen am langsamsten aufheizende Bereich ist.

6. Verfahren nach einem der vorhergehenden Ansprüche,
bei dem der Rotor vorgeheizt wird.

7. Verfahren nach einem der vorhergehenden Ansprüche,
bei dem die Strömungsmaschine (101) eine Gasturbine (101) ist.

8. Strömungsmaschine (101) mit einem Rotor,
einer Temperaturmesseinrichtung in einem Bereich des Rotors und
einer Steuereinheit mit Mitteln zum Ausführen des Verfahrens nach einem der Ansprüche 1 bis 7.

9. Kraftwerk mit einer Strömungsmaschine (101) nach Anspruch 7.
